# EUROPEAN PATENT SPECIFICATION

(11) **EP 0 452 030 B1**
(45) Date of publication and mention of the grant of the patent: **09.08.1995**
(21) Application number: 91302924.5
(22) Date of filing: 03.04.1991
(51) Int. Cl.: G02F 1/136, G02F 1/1343, G02F 1/1335

(54) **Liquid crystal display and shading member therefore**
Flüssigkristallanzeige und Abschattungseinrichtung dafür
Afficheur à cristal liquide et dispositif de protection

(30) Priority: 13.04.1990 JP 96650/90
(43) Date of publication of application: 16.10.1991
(73) Proprietor: International Business Machines Corporation, Armonk, N.Y. 10504 (US)
(72) Inventor: Kaida, Yoshimasa, Machida-chi, Tokyo-to (JP)
(74) Representative: Burt, Roger James, Dr.

(56) References cited:
- GB-A- 2 112 540
- PATENT ABSTRACTS OF JAPAN vol. 12, no. 300 (P-745) 16 August 1988 ; & JP-A-63 074 033
- PATENT ABSTRACTS OF JAPAN vol. 11, no. 342 (P-635) 10 November 1987 ; & JP-A-62 124 528
- PATENT ABSTRACTS OF JAPAN vol. 11, no. 375 (P-644) 8 December 1987 ; & JP-A-62 145 218

## Description

The present invention relates to a liquid crystal display having a shading member, and in particular to a method of manufacturing such a shading member. Shading members are used to reduce the amount of light incident on the transistors in the liquid crystal display, since light can adversely affect the operation of these transistors. Several approaches for providing shading members have been used in the past.

USP No. 4,568,149 discloses a shading member composed of, for example, aluminium that is provided between adjacent colour filters, on a transparent electrode formed of indium-tin-oxide (hereinafter abbreviated to ITO) or a mixture of indium oxide (In₂O₃) and tin oxide. (SnO₂); in other words the shading member lies between adjacent picture elements.

USP No. 4,733,948 discloses a shading member composed of, for example, aluminium that is provided at a position between adjacent colour filters on a transparent electrode provided on one of two opposing substrates and facing a thin film transistor provided on the other substrate.

Published Unexamined Patent Application (PUPA) 62-135809 discloses a photoresist that is applied to a transparent conductive film composed of ITO situated on a transparent substrate. This is then exposed and developed, thereby patterning the photoresist, and then the part of the transparent conductive film not coated with the photoresist is removed by etching. Using the patterned photoresist as a masking material, a shading layer of metal oxides is formed on the substrate in the regions where the transparent conductive film has been removed.

PUPA 63-74033 discloses a photoresist that is applied on an ITO film. Patterning is performed by exposure and development through a mask, and then the part of the ITO film not coated with the photoresist is removed by etching. Next the remaining ITO film with the photoresist deposited thereon is reduced in a hydrogen plasma, thereby lowering the resistance of each side of the ITO film which has been patterned.

USP No. 4568149 involves a large number of manufacturing steps, including a film forming step for making a transparent electrode, a film forming step for providing a shading member, and an etching step for forming time shading member. Moreover, the shading member projecting from the transparent electrode makes an injection of liquid crystal material difficult. Also, as the shading member is formed of metal such as aluminium, the light from a back light is reflected by the shading member, and enters the thin film transistor provided on the substrate facing the substrate on which the shading member is provided; this may adversely affect the characteristics of the thin film transistor.

USP No. 4733948, like USP No. 4568149, requires a large number of manufacturing steps including a film forming step for making a transparent electrode, a film forming step for providing a shading member, and an etching step for forming the shading member.

PUPA 62-135809 does not require an etching step to form a shading layer, but needs an etching step for forming a transparent electrode, and also necessitates a film forming step to form the transparent electrode and another film forming step to form the shading layer.

PUPA 63-74033 relates to the reduction of an ITO electrode, but is intended to lower the resistance of the ITO electrode, and does not suggest the use of the material obtained by reducing ITO as a shading material.

An object of the invention is to provide a liquid crystal display which permits reducing the number of manufacturing steps required to form the shading material, and diminishes the reflection of light by the shading material.

Another object of the invention is to provide a liquid crystal display in which the transparent electrode and the shading member are formed on the same level.

Viewed from a first aspect, the present invention provides a liquid crystal display comprising liquid crystal material inserted between first and second substrates, said first substrate having a first region or regions of transparent indium-tin-oxide film and a second region or regions of a film obtained by reducing indium-tin-oxide, and said second substrate having display electrodes, characterised in that said second region or regions of film are arranged to shade areas of said second substrate other than said display electrodes from light.

Viewed from a second aspect the present invention provides a method of manufacturing a shading member for a liquid crystal display comprising the steps of:
forming an ITO film on a transparent substrate; and
selectively reducing a specified region of said ITO film in order to decrease the transparency of the region of said ITO film.

GB 2,112,540A describes a liquid crystal display device in which an ITO electrode layer is reduced in a terminal pad region in order to improve the adherence between subsequently deposited metal contacts and the ITO layer. According to the invention, the material obtained by reducing ITO is used as a shading material, for example, between picture elements of a liquid crystal display. It has turned out that, as ITO is reduced, its light transmission diminishes to a low enough level for the product to be used as a shading material. ITO is widely utilized as a transparent electrode material in a liquid crystal display. Since the region adjacent to the transparent electrodes, each of which composes a picture element electrode, is generally where the shading is needed, the necessary shading member may be formed by reducing the region of ITO which is not protected with a mask, while protecting with the mask the ITO region which is to be used as the transparent electrode. Since this shading is to exist in a single layer film of ITO, no difference in level occurs between the shading member and the transparent electrode. In addition, there is no need to separately provide a film for forming the shading member, and hence the number of manufacturing steps can be reduced. Furthermore, because the material obtained by reducing ITO causes only a smalt amount of light reflection, use of this material as a shading member does not adversely affect the characteristics of the thin film transistor facing the shading member since the amount of light reflected to the transistor is lowered.

The present invention wilt be described further, by way of example only, with reference to an embodiment thereof as illustrated in the accompanying drawings, in which:
Figure 1 is a sectional view of a liquid crystal display according to a preferred embodiment of the present invention;
Figure 2 is an exploded perspective view of the liquid crystal display shown in figure 1 showing the positional relationships between the picture element electrodes and the thin film transistors on a TFT array substrate vis-a-vis the shading member formed in the common electrode provided on a facing substrate;
Figure 3 is a flowchart showing an embodiment of the method for forming the shading member or black matrix in the ITO single layer film;
Figure 4 shows sectional views which clarify the successive steps shown in Figure 3; and
Figure 5 is a graph illustrating the light transmissiom of the shading member formed by the method of Figure 3.

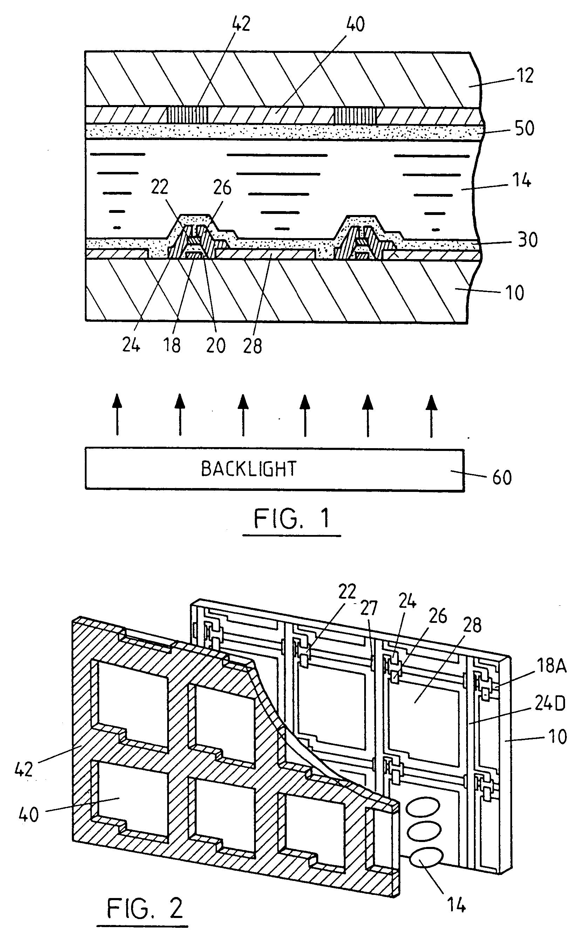

Figure 1 shows a liquid crystal display according to a preferred embodiment of the present invention. As shown in the figure, a nematic liquid crystal material 14 is inserted between a TFT array substrate 10 and a facing substrate 12. The TFT array substrate 10 and the facing substrate 12 are both formed of transparent glass. On the TFT array substrate 10, a thin film transistor (hereinafter abbreviated to TFT) is formed for each picture element. That is, on the TFT array substrate 10, a gate electrode 18 is formed. Then a gate insulation film 20 is formed on the gate electrode 18 and, on this gate insulation film 20, an amorphous silicon semiconductor layer 22 is formed. To the semiconductor layer 22, a drain electrode 24 and a source electrode 26 are connected, the drain electrode 24 and the source electrode 26 being insulated from each other. As shown in Figure 2, the gate electrode 18 is connected to an adress line 18A, and the drain electrode 24 to a data line 24D. The source electrode 26 is connected to a picture element electrode 28 consisting of ITO.

On the facing substrate 12, a common electrode 40 of ITO and a shading material or a black matrix 42 consisting of a material obtained by reducing ITO are formed. The common electrode 40 and the shading member 42 are on the same plane, there thus being no difference in level between them. As shown in Figure 2, the shading member 42 is formed in a region which covers an area not occupied by the picture element electrodes 28 on the TFT array substrate 10. Thus, the shading member 42 is formed in the region facing the address line 18A, data line 24D and the amorphous silicon semiconductor layer 22.

On the semiconductor layer 22, drain electrode 24, source electrode 26 and the picture element electrodes 28 on the TFT array substrate 10, there is formed an orientation film 30 or orienting the molecular axis of the liquid crystal material in a predetermined direction. Similarly on the common electrode 40 and the shading member 42, there is formed another orientation film 50 for orienting the molecular axis of the liquid crystal material in a predetermined direction.

On the side of the TFT array substrate 10 not containing TFTs, a backlight 60 is provided. The shading member 42 formed of a material obtained by reducing ITO not only prevents the light incident on the side of the facing substrate 12 from entering the semiconductor layer 22, but also, because of the small reflection factor of the shading member 42, does not allow the light received from the backlight 60 through the transparent picture element electrodes 28 to reflect and enter the semiconductor layer 22.

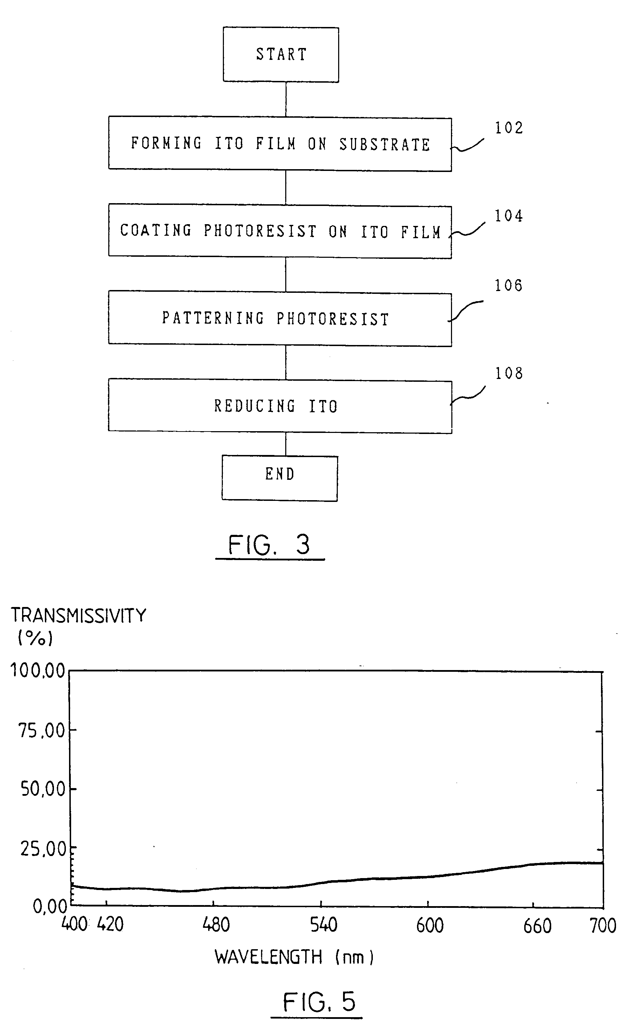

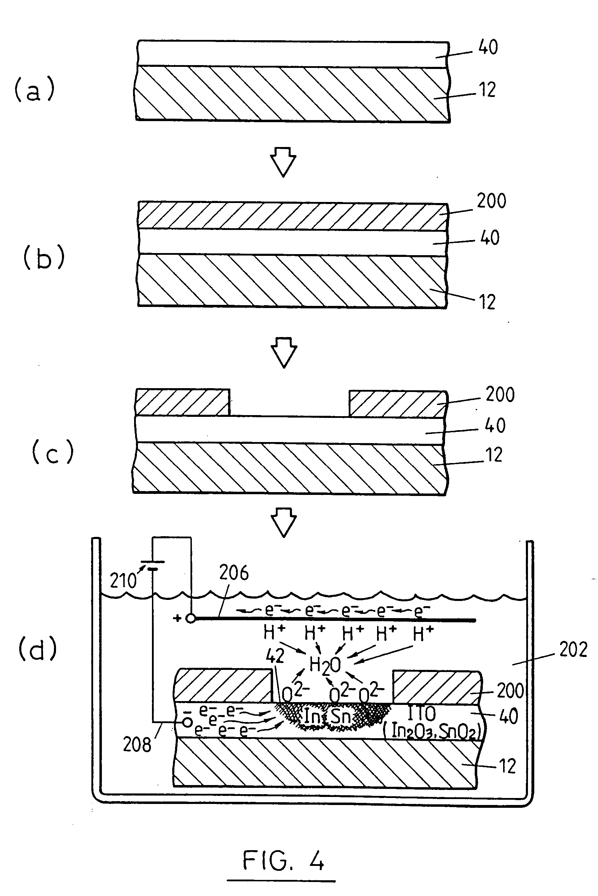

Figure 3 shows an embodiment of the method for forming the shading member or black matrix 42 in the ITO single layer film, and Figure 4 represents the respective steps shown in Figure 3. Firstly, an ITO film 40 is formed on the glass facing subststrate 12 (refer to 102 of Figure 3 and (a) of Figure 4). Then, photoresist 200 is coated on the whole surface of the ITO film 40 (refer to 104 of Figure 3 and Figure 4 (b)). Then, by using a photomask which covers only the region corresponding to the picture element electrodes 28 (which in other words, permits light to pass through the region corresponding to the semiconductor layer 22, the address line 18A and the data line 24D), the photoresist 200 is exposed, followed by development. By this process, only the part of the photoresist 200 which has been exposed remains unremoved (refer to 106 of Figure 3 and figure 4 (c)).

Then, the ITO film 40, patterned with the photoresist 200 as described above, and the glass substrate 12 are immersed in a conductive solution 202 containing hydrogen H, as shown in Figure 4 (d). With the cathode of a d-c power source 210 connected to the ITO film 40 and its anode 206 immersed in the conductive solution 202, voltage is applied between the ITO film 40 and the anode 206, causing the following reactions to take place in the ITO film 40: $\text{In₂O₃ + 3H₂ --> 2In + 3H₂O}$$\text{SnO₂ + 2H₂ --> Sn + 2H₂O} \text{(ITO = In₂O₃ + SnO₂)}$

In this way, the sections of ITO not coated with the photoresist 200 are reduced (refer to 108 of figure 3) causing the metal components in these sections to increase. As a result, the light transmission in this part diminishes, thus providing a shading member 42.

In preferred embodiments the reduction of time ITO film is performed by applying a voltage of -20V to the ITO film (5% by weight of SnO₂ and 95% by weight of In₂O₃) for 3 minutes, using a 0.03% by weight citric acid solution as the conductive solution 202 containing hydrogen. As shown in Figure 5, the resulting shading member 42 had a 10 to 20% transmissivity in the visible ray wavelength region (about 400 to 700nm). These values are low enough for the material to be useful as a shading member. In addition the common electrode 40 and the shading member 42 are manufactured on the same level, thus forming a compact design.

The reduction process is believed to depend on voltage and time, and hence if a sufficiently long time is expended, an even lower voltage, for example as low as 10V, may be used as the voltage to be applied to the ITO film.

Further, as the conductive solution containing hydrogen, any solution which is generally usable for anodic oxidization processes may be used, other than the citric acid solution.

Furthermore, the smaller the amount of oxygen in the ITO film, the lower the light transmission. Hence, by expending a sufficiently long time for reduction, the light transmissivity may be brought near 0%. However, as the light transmissivity approaches 0%, the black colour changes to a metallic luster and reflects the light from the backlight 60, thereby illuminating the semi-conductor layer 22, and producing photo-leakage current from the TFT. Taking this into account, a light transmissivity of about 10 to 20% is considered appropriate for the shading member 42.

Since the ITO film is used not only as the raw material of the shading member 42 but also for the common electrode 40, it should be ensured that the low resistance of the transparent commom electrode 40 is not modified. With this in mind, the composition of ITO defined as In₂O₃ : SnO₂ should desirably range from (95% by weight : 5% by weight) to (85% by weight: 15% by weight).

The embodiment of the invention described above enables the reflection of the shading member to be reduced, and eliminates any difference in level between the shading member 42 and the transparent electrode 40. Further, it permits reducing the number of manufacturing steps necessary to make the transparent electrode 40 and the shading member 42.

## Claims

1. A liquid crystal display comprising liquid crystal material (14) inserted between first (12) and second (10) substrates, said first substrate having a first region or regions of transparent indium-tin-oxide film (40) and a second region or regions of a film (42) obtained by reducing indium-tin-oxide, and said second substrate having display electrodes (28), characterised in that said second region or regions of film are arranged to shade areas of said second substrate other than said display electrodes from light.

2. A liquid crystal display as claimed in claim 1, comprising an array of transistors to drive associated display electrodes (28), said second region or regions (42) being aligned with said transistors to reduce the amount of light incident on said transistors, and the indium-tin-oxide film (40) serving as a common electrode for the liquid crystal display.

3. A liquid crystal display as claimed in claim 2 in which said transistors are connected by drive conductors, and said second region or regions (42) extend across the indium-tin-oxide film in substantial alignment with said conductors.

4. A liquid crystal display as claimed in claim 2 or claim 3, wherein said display electrodes (28) are formed from a second layer of ITO supported on the second substrate (10), and said transistors are disposed on said second substrate.

5. A method of manufacturing a shading member for a liquid crystal display comprising the steps of:
forming an ITO film (40) on a transparent substrate (12); and
selectively reducing a specified region (42) of said ITO film in order to decrease the transparency of the region of said ITO film.

6. A method of manufacturing a shading member as claimed in claim 5, further comprising the steps of:
providing a protective mask on the region other than said specified region of the ITO film (40);
immersing said ITO film (40) provided with said protective mask in an electrically conductive solution (202) containing hydrogen; and
applying a voltage to said ITO film (40) in said electrically conductive solution.

7. A method of manufacturing a shading member as claimed in claim 6 wherein a photoresist (200) is used as said protective mask.

## Patentansprüche

1. Eine Flüssigkristallanzeige mit einem Flüssigkristallmaterial (14), das zwischen einem ersten (12) und einem zweiten (10) Substrat angeordnet ist, wobei das genannte erste Substrat (einen) erste(n) Bereich(e) aus einem transparenten Indium-Zinnoxidfilm (40) aufweist, und (einen) zweite(n) Bereich(e) aus einem Film (42), den man durch Reduzieren von Indium-Zinnoxid erhält, und wobei das genannte zweite Substrat Anzeigeelektroden (28) aufweist, dadurch gekennzeichnet, daß der (die) genannte(n) zweite(n) Bereich(e) des Films so angeordnet (ist) sind, daß bestimmte Flächen des genannten zweiten Substrats, außer die genannten Anzeigelektroden, gegen Licht abgeschattet werden.

2. Eine Flüssigkristallanzeige nach Anspruch 1, die eine Anordnung von Transistoren umfaßt, um zugeordnete Anzeigeelektroden (28) anzusteuern, wobei der (die) genannte(n) zweite(n) Bereich(e) (42) mit den genannten Transistoren ausgerichtet sind, um die auf die genannten Transistoren einfallende Lichtmenge zu reduzieren, und wobei der Indium-Zinnoxidfilm (40) als gemeinsame Elektrode für die Flüssigkristallanzeige dient.

3. Eine Flüssigkristallanzeige nach Anspruch 2, in der die genannten Transistoren durch Ansteuerungsleiter verbunden sind, und in der (die) genannte(n) zweite(n) Bereich(e) (42) sich über den Indium-Zinnoxidfilm erstrecken, im wesentlichen ausgerichtet mit den genannten Leitern.

4. Eine Flüssigkristallanzeige nach Anspruch 2 oder Anspruch 3, bei der die genannten Anzeigeelektroden (28) aus einer zweiten Schicht aus Indium-Zinnoxid (ITO) gebildet werden, die auf dem zweiten Substrat (10) aufliegt, und wobei die genannten Transistoren auf dem genannten zweiten Substrat angeordnet sind.

5. Ein Verfahren zur Herstellung eines Abschattungselements für eine Flüssigkristallanzeige, das folgende Schritte umfaßt:
Bilden eines ITO-Films (40) auf einem transparenten Substrat (12); und
selektives Reduzieren eines bestimmten Bereichs (42) des genannten ITO-Films, um die Transparenz im Bereich des genannten ITO-Films zu mindern.

6. Ein Verfahren zur Herstellung eines Abschattungselements nach Anspruch 5, desweiteren folgende Schritte aufweisend:
Bereitstellen einer Schutzmaske in dem Bereich, der außerhalb des genannten bestimmten Bereichs des ITO-Films (40) liegt;
Eintauchen des genannten ITO-Films (40), der mit der genannten Schutzmaske ausgestattet ist, in eine elektrisch leitende Lösung (202), die Wasserstoff enthält; und
Anlegen einer Spannung an den genannten ITO-Film (40) in der genannten elektrisch leitenden Lösung.

7. Ein Verfahren zur Herstellung eines Abschattungselements nach Anspruch 6, bei dem ein Photoresist (200) als die genannte Schutzmaske verwendet wird.

## Revendications

1. Afficheur à cristal liquide comprenant un matériau (14) de cristal liquide inséré entre un premier substrat (12) et un second substrat (10), ledit premier substrat ayant une première région ou des régions de film (40) d'oxyde d'indium-étain et une seconde région ou des régions d'un film (42) obtenu en réduisant de l'oxyde d'indium-étain, et ledit second substrat ayant des électrodes d'affichage (28), caractérisé en ce que ladite seconde région ou les régions du film sont disposées pour protéger de la lumière les zones dudit second substrat autres que lesdites électrodes d'affichage.

2. Afficheur à cristal liquide selon la revendication 1, comprenant un réseau de transistors pour piloter des électrodes (28) d'affichage associées, ladite seconde région ou les régions (42) étant alignées avec lesdits transistors pour réduire la quantité de lumière incidente sur lesdits transistors, et le film (40) d'oxyde d'indium-étain servant d'électrode commune pour l'afficheur à cristal liquide.

3. Afficheur à cristal liquide selon la revendication 2, dans lequel lesdits transistors sont connectés par des conducteurs de pilotage, et ladite seconde région ou les régions (42) s'étendent en travers du film d'oxyde d'indium-étain pratiquement en alignement avec lesdits conducteurs.

4. Afficheur à cristal liquide selon la revendication 2 ou la revendication 3, dans lequel lesdites électrodes d'affichage (28) sont formées à partir d'une seconde couche de ITO supportée sur le second substrat (10), et lesdits transistors sont disposés sur ledit second substrat.

5. Procédé de fabrication d'un élément de protection pour un afficheur à cristal liquide comprenant les étapes consistant à :
former un film ITO (40) sur un substrat transparent (12) ; et
réduire sélectivement une région spécifiée (42) dudit film ITO afin de diminuer la transparence de la région dudit film ITO.

6. Procédé de fabrication d'un élément de protection selon la revendication 5, comprenant en outre les étapes consistant à :
fournir un masque protecteur sur la région autre que ladite région spécifiée du film ITO (40) ;
immerger ledit film ITO (40) pourvu dudit masque protecteur dans une solution électriquement conductrice (202) contenant de l'hydrogène ; et
appliquer une tension audit film ITO (40) dans ladite solution électriquement conductrice.

7. Procédé de fabrication d'un élément de protection selon la revendication 6, dans lequel un photorésist (200) est utilisé au titre dudit masque protecteur.
